# DEMANDE DE BREVET EUROPEEN

(11) **EP 3 225 594 A1**
(43) Date de publication de la demande: **04.10.2017**
(21) Numéro de dépôt: 17160008.3
(22) Date de dépôt: 09.03.2017
(51) Int. Cl.: C02F 1/00, B01D 63/02, B01D 61/18, B01D 65/08

(54) **ÉLÉMENT FILTRANT POUR LA FILTRATION DE L'EAU COURANTE, NOTAMMENT EN MILIEU HOSPITALIER**

(30) Priorité: 31.03.2016 FR 1652771
(71) Demandeur: AQUA-TOOLS, 78300 Poissy (FR)
(72) Inventeur: RAYMOND, Marc, 75116 Paris (FR)
(74) Mandataire: Dupuis-Latour, Dominique

(57) **Abrégé**

Un corps enveloppe (12) loge un bloc filtrant (21) comprenant une cartouche de microfiltration (22) enfermée dans un carter (24). Le carter est fermé en partie supérieure par un pare-carter (28) en forme de couvercle perforé (30). Un volume de détente (42), ménagé entre le pare-carter et la paroi supérieure du corps enveloppe, s'interpose entre l'arrivée d'eau et les orifices du pare-carter et engendre un dégazage et un tourbillonnement de l'eau à filtrer avant son admission dans le bloc filtrant. Un espace périphérique (44) est ménagé entre la paroi latérale (26) du carter et la paroi latérale (14) du corps enveloppe, en communication avec le volume de détente. La paroi latérale du carter comporte une pluralité de trous (40) permettant une circulation latérale indirecte (C) d'une fraction minoritaire de l'eau à filtrer (A) admise (B) par les perforations du pare-carter et traversant la cartouche filtrante, en retour (D) vers le volume de détente via l'espace périphérique.

## Description

L'invention concerne les dispositifs de filtration de l'eau aux points de puisage des eaux sanitaires, en particulier dans les services hospitaliers et autres établissements recevant du public.

Ces dispositifs (ci-après "éléments filtrants") peuvent notamment se présenter sous la forme d'un module à monter sur un bec de robinet, ou d'une douchette à monter sur un flexible de douche, ces exemples n'étant bien entendu pas limitatifs.

Il s'agit d'assurer la sécurisation microbiologique de l'eau des réseaux sanitaires. On sait en effet que la maitrise des infections nosocomiales est l'une des principales priorités pour les établissements de santé et la maitrise des légionelles pour les établissements recevant du public. Une grande partie de ce type d'infections est véhiculée via l'eau chaude ou froide du réseau sanitaire, et la sécurisation des équipements de distribution de l'eau est une des techniques les plus efficaces dans la lutte contre les microorganismes hydriques, plus particulièrement par mise en place de systèmes de filtration aux points d'usage de l'eau sanitaire, en équipant de dispositifs de filtration les douches, robinets, postes de lavage des mains, etc.

Lorsqu'ils sont utilisés dans un environnement hospitalier, ces éléments filtrants sont des dispositifs médicaux de classe I qui doivent répondre à des exigences très strictes, notamment pouvoir rester fonctionnels pendant une longue durée, typiquement 62 jours avec une perte de charge introduite restant inférieure à 2 bars, et ceci avec une filtration complète des bactéries, c'est-à-dire que l'eau sortant du dispositif après filtrage ne doit présenter aucune contamination bactérienne.

Ces applications spécifiques ne sont bien entendu pas limitatives de l'invention, qui peut également être mise en oeuvre dans d'autres contextes par exemple pour produire de l'eau potable, améliorer les qualités organoleptiques de l'eau dans les applications domestiques par l'élimination de composés chimiques de l'eau, chlore, calcaire, etc. ou toute autre application industrielle ou domestique.

Ces dispositifs de filtration mettent en oeuvre une cartouche filtrante enfermée dans un carter et traversée par l'eau à filtrer. La cartouche est typiquement une cartouche de microfiltration, notamment de microfiltration sur membranes en fibres creuses, technique qui est aujourd'hui reconnue comme particulièrement performante et économique pour la purification de l'eau dans les domaines tant professionnels que domestiques. En effet, la microfiltration permet d'éliminer non seulement les particules de petite dimension, mais également les organismes pathogènes, grâce à l'utilisation de fibres creuses dont le seuil de coupure peut descendre jusqu'à 0,1 µm. On notera à cet égard que l'invention n'est pas limitée à la seule microfiltration, mais peut être également appliquée à l'ultrafiltration (seuil de coupure des fibres compris entre 0,1 et 0,01 µm) et à la nanofiltration (seuil de coupure des fibres compris entre 0,01 et 0,001 µm).

Les fibres individuelles sont repliées en U (à la manière d'une épingle à cheveux) et groupées ensemble pour former un faisceau ou paquet, qui se présente commodément sous la forme d'une cartouche en forme de rouleau cylindrique. Dans le paquet, les fibres se présentent toutes parallèles entre elles, dans une orientation correspondant à une direction axiale de la cartouche cylindrique. Du côté de leur extrémité libre débouchante (aux extrémités des branches du U), les fibres du paquet sont enrobées et réunies ensemble dans une résine ou "potting". Ensuite, une épaisseur de matériau est éliminée sur la face libre du potting de manière à découvrir la lumière centrale des fibres et mettre celle-ci en communication avec l'environnement extérieur.

Il existe deux manières d'utiliser une telle cartouche de fibres creuses pour opérer la filtration de l'eau.

Dans une première configuration, dite "in-out", si l'on prend la convention que l'eau à filtrer arrive par le haut et l'eau filtrée sort vers le bas, le côté du potting (c'est-à-dire le côté où débouchent les lumières internes des fibres creuses) est placé vers le haut, et le côté opposé (celui de la pliure des fibres en U, où ne débouchent pas les lumières internes) est dirigé vers le bas. L'eau à filtrer pénètre alors par la lumière centrale de chaque fibre creuse, traverse la paroi poreuse de la fibre (où s'opère la filtration) et ressort latéralement, par l'extérieur de cette paroi. Le flux sortant est collecté latéralement et l'eau filtrée est évacuée vers le bas.

Dans l'autre configuration, dite "out-in" - qui est la configuration à laquelle se réfère l'invention -, la face du potting où débouchent les lumières des fibres creuses est, à l'inverse, placée vers le bas. L'admission de l'eau à filtrer se fait alors par l'extérieur de la paroi poreuse de chaque fibre, l'eau à filtrer traverse cette paroi poreuse de l'extérieur vers l'intérieur, puis l'eau filtrée parvenant à la lumière interne est évacuée vers le bas jusqu'à l'extrémité débouchante de cette lumière, pour être ensuite collectée de manière à former le flux d'eau filtrée.

Dans l'un ou l'autre cas la totalité du flux de l'eau à filtrer traverse la cartouche et les fibres creuses qu'elle contient, que la lumière centrale des fibres serve à l'admission de l'eau à filtrer (dans la première configuration "in-out") ou qu'elle serve à collecter l'eau filtrée après traversée de la paroi (dans la seconde configuration "out-in").

Le FR 2 961 714 A1 (Aqua-Tools) décrit un tel dispositif de filtration de l'eau.

Le DE 10 2006 002013 B3 décrit également une cartouche de ce type, avec possibilité d'opérer selon les deux configurations "in-out" ou "out-in" décrites plus haut selon le sens dans lequel est placée la cartouche à l'intérieur du carter de boitier, avec le potting vers le haut ou vers le bas. Dans le premier cas l'admission se fait par un flux orienté axialement par rapport à la cartouche cylindrique, la collecte étant opérée radialement ; dans le second cas l'admission se fait radialement et la collecte, axialement.

L'une des limites de ces dispositifs réside dans leur capacité à traiter des volumes d'eau importants sans réduction significative du débit ou, en d'autres termes, à assurer une durée de vie suffisamment longue avant échange du dispositif ou changement de la cartouche filtrante, opérations particulièrement pénalisantes, tant du point de vue de la surveillance (nécessité de vérifier systématiquement tous les points de puisage d'eau et, si nécessaire, de démonter l'élément filtrant pour changer la cartouche) que du point de vue économique.

Un but de l'invention est de proposer un nouvel agencement d'élément filtrant qui permette d'obtenir, de manière très simple et économique, une durée de vie sensiblement plus longue que celle des dispositifs de filtrage connus.

Un autre but de l'invention est de proposer un tel élément filtrant qui puisse assurer un autonettoyage permanent par remise en suspension des débris accumulés dans la cartouche filtrante, permettant à cette dernière, à pression constante, de conserver beaucoup plus longtemps ses propriétés initiales sans perte de débit, et de filtrer un volume d'eau plus important dans le temps.

Ces buts sont atteints, conformément à l'invention, par un élément filtrant d'un type connu d'après le DE 10 2006 002013 B3 précité.

De façon caractéristique de l'invention, l'élément filtrant est spécifiquement agencé de la manière exposée dans la partie caractérisante de la revendication 1.

Des formes de réalisation avantageuses sont présentées dans les sous-revendications.

On va maintenant décrire un exemple de mise en oeuvre de l'invention, en référence aux dessins annexés où les mêmes références désignent d'une figure à l'autre des éléments identiques ou fonctionnellement semblables.
La Figure 1 est une vue éclatée d'un élément filtrant selon l'invention, en forme de filtre de robinet.
Les Figures 2a à 2c illustrent trois variantes possibles de l'élément filtrant de la Figure 1, pour la production de jets de sortie de formes différentes.
La Figure 3 est une coupe par un plan axial de l'élément filtrant de la Figure 1.
Les Figures 4 et 5 illustrent la structure d'ensemble et le fonctionnement de la cartouche filtrante mise en place à l'intérieur de l'élément filtrant des Figures 1 à 3.
La Figure 6 est un graphique comparatif illustrant les variations du débit d'eau filtrée en sortie en fonction du volume total filtré (et donc de la durée d'utilisation), respectivement pour un élément filtrant de type conventionnel et pour un élément filtrant selon l'invention.
La Figure 7 est une vue éclatée d'un élément filtrant selon l'invention, en forme de douchette.
La Figure 8 est une coupe par un plan axial de l'élément filtrant de la Figure 7.

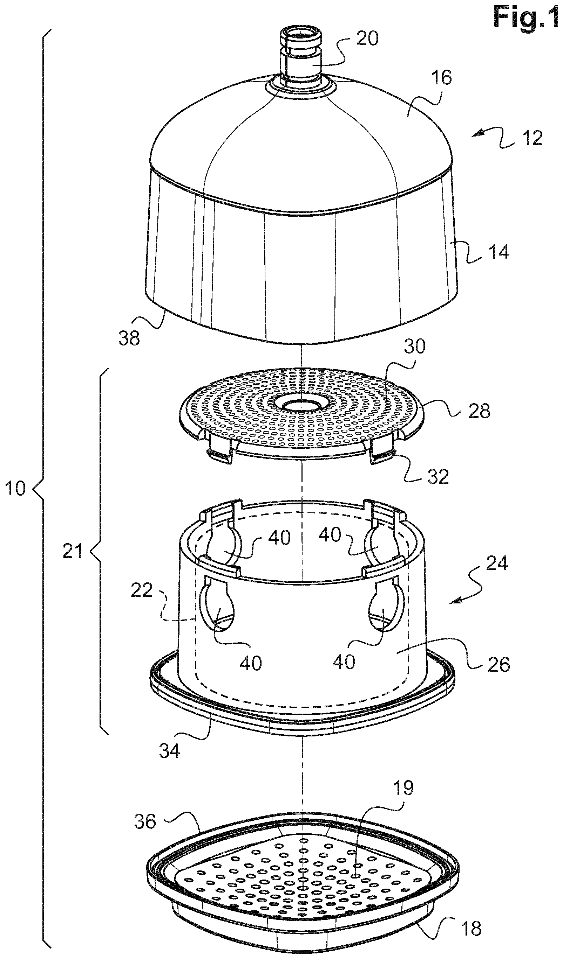

Les Figures 1 à 5 illustrent un mode de réalisation de l'invention, sous forme d'un élément filtrant adaptable à un bec de robinet délivrant l'eau à filtrer.

Cet élément filtrant 10 comprend un corps-enveloppe 12 en forme de cloche, avec une paroi latérale 14 et une paroi supérieure 16, l'ensemble étant fermé en bas par une paroi inférieure 18. L'eau à filtrer est admise par une arrivée d'eau 20 en forme d'embout permettant le montage sur un bec de robinet, de manière que l'eau à filtrer soit mise en communication étanche avec le volume intérieur du corps-enveloppe.

L'eau filtrée est expulsée au niveau de la paroi inférieure 18, qui est par exemple munie de perforations 19 permettant de délivrer l'eau filtrée sous forme d'un jet de type douche.

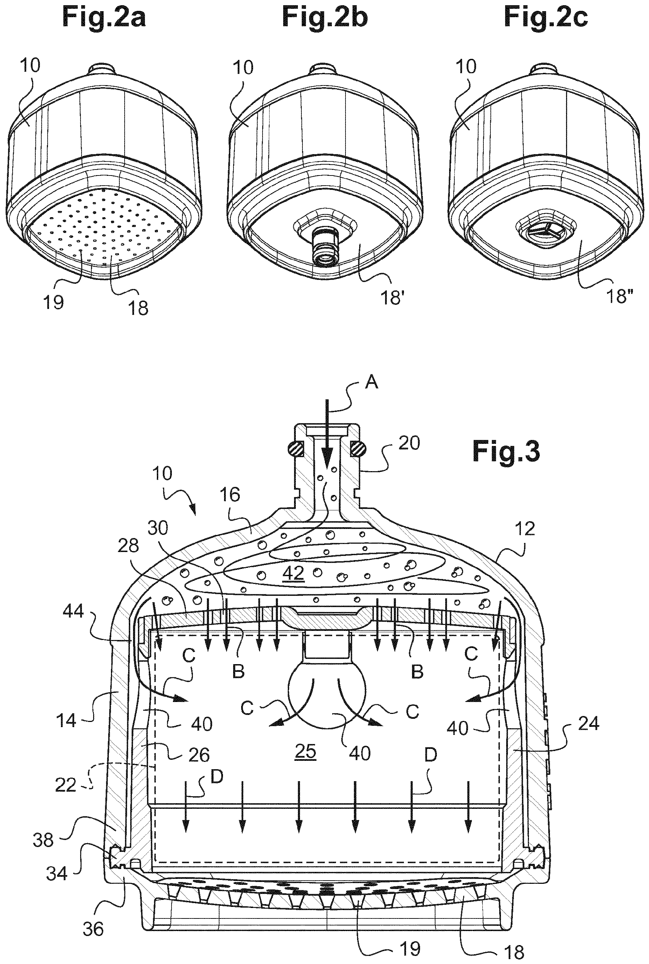

D'autres formes de sorties d'eau sont toutefois envisageables, et les Figures 2a à 2c illustrent diverses variantes possibles 18, 18' et 18" de la paroi inférieure, respectivement: avec une multitude de perforations 19 comme illustré sur la Figure 1 pour une sortie de type jet-douche ; avec une ouverture centrale unique pour une sortie de type jet droit ; ou encore avec un raccord étanche pour une sortie en ligne autorisant le branchement d'un accessoire (tube, raccord flexible, etc.) en aval de l'élément filtrant 10.

Le corps-enveloppe 12 enferme un ensemble de bloc filtrant 21, échangeable ou non.

Le bloc filtrant 21 comprend une cartouche filtrante 22 enfermée dans un carter 24.

La cartouche filtrante est avantageusement une cartouche de microfiltration réalisée à partir de fibres creuses dont le seuil de coupure est inférieur à 1,5 µm, de préférence de l'ordre de 0,1 µm, le matériau constituant les fibres creuses étant par exemple choisi parmi des composés sulfonés ou fluorés, en eux-mêmes connus.

Les dimensions de la cartouche filtrante sont calculées en fonction des caractéristiques des fibres (nombre, diamètre, longueur), du débit de l'eau à traiter et de la pression d'admission. Pour une application typique au filtrage de l'eau d'un réseau de distribution courant, on peut utiliser une cartouche de diamètre 60 à 70 mm et de hauteur 30 à 45 mm. Les indications chiffrées données plus bas à titre d'exemple le seront en référence à ce type de cartouche filtrante typique.

Le carter 24 définit un volume intérieur 25 dans lequel est logée la cartouche 22, qui est enveloppée par une paroi latérale 26 du carter.

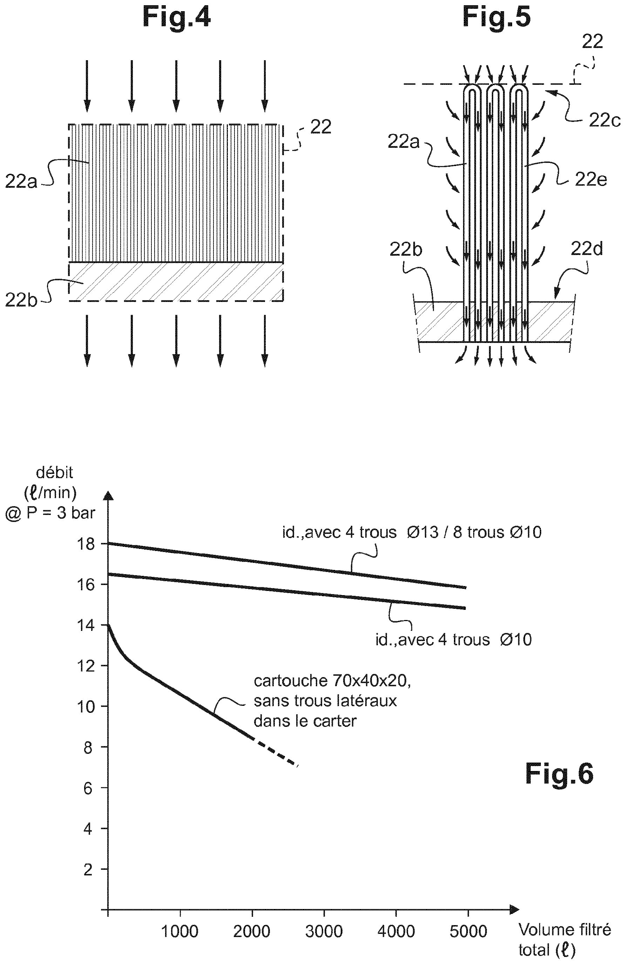

Les Figures 4 et 5 illustrent plus précisément la structure générale de la cartouche filtrante 22 et la manière dont les fibres creuses opèrent la filtration de l'eau.

Cette cartouche 22, qui est en elle-même d'un type connu et non modifié, comporte un faisceau ou paquet de fibres creuses 22a dont les extrémités inférieures sont réunies ensemble et noyées dans une résine ou potting 22b. Comme on peut le voir plus en détail Figure 5, les fibres creuses 22a sont repliées de manière à leur donner une forme en épingle à cheveux, avec une extrémité supérieure (avec les conventions de la figure) 22c où toutes les fibres présentent leur pliure, et une extrémité inférieure 22d du côté des branches du U. Les extrémités 22d sont noyées dans le potting 22b après une étape de fabrication permettant de laisser déboucher vers l'extérieur, au niveau de la face inférieure du potting 22b, les lumières internes 22e de toutes les fibres 22a.

Le filtrage est opéré selon la technique "out-in" exposée en introduction, c'est-à-dire que l'eau à filtrer arrive par le haut sur la face supérieure du paquet de fibres de la cartouche 22, traverse la paroi poreuse de la fibre creuse qui assure ainsi la filtration de l'eau, est recueillie dans la lumière interne 22e et est évacuée à l'extrémité 22d vers l'extérieur pour recueil et collecte de l'eau filtrée.

Selon une caractéristique avantageuse (mais facultative) de l'invention, le bloc filtrant 21 est muni d'un pare-carter 28 en forme de couvercle perforé venant coiffer le carter 24 dans sa partie supérieure, et tourné vers la paroi supérieure 16 du corps-enveloppe 12. Le pare-carter 28 est pourvu d'un grand nombre de perforations 30, typiquement au moins 300 perforations, par exemple 370 perforations, de diamètre inférieur à 2 mm chacune dans l'exemple donné plus haut d'une cartouche filtrante 22 de diamètre 60 à 70 mm. Le pare-carter 28 est monté sur le carter 24 par exemple au moyen de pattes 22 encliquetées dans des évidements homologues formés sur la paroi latérale 26 du carter 24.

En partie inférieure, le carter 24 présente un rebord périphérique 34 coopérant avec un rebord périphérique inférieur homologue 36 de la paroi inférieure 18 du corps-enveloppe 12. Ces deux éléments sont assemblés entre eux ainsi qu'au rebord périphérique 38 de la paroi latérale 14 du corps-enveloppe 12 par exemple par soudure aux ultrasons, dans le cas où le filtre de robinet est un filtre non démontable, à usage unique. En variante, ces éléments peuvent être des éléments déboitables, dans le cas où l'on souhaiterait pouvoir échanger le bloc filtrant 21 (cartouche filtrante 22 et son carter 24), en conservant le corps-enveloppe 12.

De façon caractéristique de l'invention, des trous 40 sont ménagés dans la paroi latérale 26 du carter, par exemple 4 à 8 trous de 10 à 13 mm de diamètre, pour une cartouche ayant les dimensions typiques indiquées plus haut de 60 à 70 mm de diamètre pour une hauteur de 30 à 45 mm. Ces trous sont de préférence répartis circonférentiellement de façon régulière, et situés dans la moitié supérieure de la paroi latérale 26 (c'est-à-dire la moitié située la plus proche de la paroi supérieure 16 du corps-enveloppe 14).

Selon encore une autre caractéristique de l'invention, un volume 42, ci-après dénommé volume de détente, est ménagé entre la partie supérieure du carter (au niveau de la face extérieure du pare-carter 28, si celui-ci est présent) et la face intérieure de la paroi supérieure 16 du corps-enveloppe 12.

De plus, un espace périphérique 44 est ménagé entre la face extérieure de la paroi latérale 26 du carter 24 et la face intérieure de la paroi latérale 14 du corps-enveloppe 12. En direction axiale, cet espace périphérique 44 est ménagé au moins dans la région des trous 40, en partie supérieure il débouche dans le volume de détente 42. En partie inférieure, à la jonction des rebords périphériques 34 et 36, l'espace périphérique 44 n'est pas débouchant.

En direction radiale, la largeur de cet espace périphérique 42 est relativement faible, de préférence inférieure à 2 mm.

On va maintenant décrire la manière dont fonctionne du point de vue hydrodynamique l'élément filtrant que l'on vient de décrire.

Le rôle du pare-carter 28 est double :
- en premier lieu, il contribue au confinement d'un volume intercalaire (le volume de détente 42) entre l'arrivée d'eau 20 et la surface d'admission d'eau de la cartouche filtrante 22. Cette dernière surface est protégée par le pare-carter 28, et celui-ci assure une diffusion uniforme de l'eau à filtrer sur la cartouche filtrante 22 via le volume de détente 42 et les perforations multiples 30. En d'autres termes, le pare-carter 28 casse le jet d'entrée d'eau incident venant de l'arrivée 20 et protège la face supérieure de la cartouche filtrante 22 ;
- en second lieu, la présence d'un volume de détente 42, en aval de l'arrivée d'eau et en amont de l'admission d'eau dans la cartouche filtrante, produit un dégazage de l'eau arrivant sous pression par l'arrivée 20 et un tourbillonnement de l'eau et des bulles dans ce volume 42, et le pare-carter 28 favorise par confinement de l'eau dans le volume de détente ces phénomènes de dégazage et de tourbillonnement.

L'eau admise par l'arrivée d'eau (flèche A) est ainsi détendue et dégazée dans le volume 42, puis régulièrement répartie par les perforations 30 du pare-carter 28 sur la face supérieure (face d'entrée) de la cartouche filtrante 22 (flèches B).

Un autre phénomène important et caractéristique de l'invention est le fait que, en raison de la présence des trous latéraux 40, une fraction de l'eau ayant pénétré dans le bloc filtrant 22 (flux schématisé par la flèche A) va être détournée vers l'espace périphérique 44 (flèches C), tandis que la majeure partie - mais non la totalité - du flux incident traverse les perforations 30 du pare-carter 28 pour atteindre la face supérieure (face d'entrée) de la cartouche filtrante 22 (flèches D).

Le nombre, la dimension et la position des trous latéraux 40, ainsi que les dimensions de l'espace périphérique 44, sont choisis de manière que le flux d'eau passant par les trous 44 (flèches C) soit une fraction minoritaire, par exemple et sans caractère limitatif de l'ordre de 40 %, du débit total incident provenant de l'arrivée d'eau (flèche A).

Les trous 40 permettent ainsi de favoriser une circulation indirecte (flèches C) de l'eau à hauteur de 40 % environ (dans cet exemple) vers la cartouche filtrante 22, notamment vers la partie supérieure de celle-ci qui est la plus sujette au colmatage. Le reste de l'eau (flèches B), à proportion de 60 % environ, s'écoule directement de haut en bas vers la région supérieure des fibres de la cartouche 22, au travers des trous 30 du pare-carter 28.

L'admission latérale d'une (faible) partie du flux d'eau incident a pour effet de produire au sein du paquet de fibres creuses 22a des phénomènes de turbulence et de brassage produisant un nettoyage permanent de la cartouche filtrante 22 avec remise en suspension et élimination des débris, des particules, etc. susceptibles de s'accumuler dans la cartouche et de se déposer en surface sur les parois des fibres creuses, et qui, sinon, viendraient très rapidement dégrader les performances de filtration de la cartouche, en termes de débit disponible.

Par ailleurs, du fait du caractère minoritaire de la fraction du flux d'eau admise latéralement, l'incidence est faible sur le débit global de l'élément filtrant, avec l'avantage de conserver au cours du temps d'excellentes performances en termes de caractéristique débit/volume filtré, pour une pression d'admission constante.

Il en résulte une très longue durée d'utilisation avant remplacement de la cartouche ou du filtre de robinet, typiquement une durée supérieure à 80 jours dans des conditions d'utilisation courante d'un robinet de distribution d'eau utilisé en milieu hospitalier.

La Figure 6 est un graphique comparatif illustrant les performances d'un élément filtrant selon l'invention.

Le graphique représente différentes caractéristiques mesurées de débit instantané, à une pression d'admission amont constante (P = 3 bars), en fonction du volume filtré total, qui concrètement est le paramètre qui détermine le temps au bout duquel la cartouche doit être remplacée.

Les trois caractéristiques ont été relevées avec un même type de cartouche filtrante, constituée d'un paquet de fibres creuses 70 x 40 x 20 (diamètre du paquet de fibres x hauteur du paquet x hauteur du potting). Cette cartouche a été placée soit dans un carter simple démuni de pare-carter et de trous latéraux dans le carter (c'est-à-dire selon une configuration conventionnelle) soit dans un carter selon l'invention avec pare-carter et trous latéraux, comme décrit plus haut en ce qui concerne le nombre et la dimension des perforations et des trous latéraux.

Pour évaluer l'influence du nombre et de la dimension des trous latéraux, plusieurs essais ont été effectués : avec 4 trous de 0 10 répartis circonférentiellement à 90°, avec 4 trous de 0 13 répartis circonférentiellement à 90° et avec 8 trous de 0 10 répartis circonférentiellement à 45°. Dans tous les cas, les trous sont ménagés dans la demi-hauteur supérieure de la paroi latérale du carter, comme dans le mode de réalisation décrit plus haut.

Avec l'agencement conventionnel, on constate une diminution très rapide des performances au fur et à mesure de la filtration.

En revanche, avec l'agencement d'élément filtrant selon l'invention, le débit reste très élevé même après une très longue durée, ce qui rend possible la réalisation d'un élément filtrant répondant aux exigences très strictes d'un dispositif médical de classe I utilisé en milieu hospitalier, typiquement, comme indiqué plus haut, une durée d'utilisation minimale de 62 jours avec une perte de charge finale inférieure à 2 bars.

Ces performances sont atteintes dans toutes les configurations testées de diamètre et de nombre de trous, avec une influence très faible de ces paramètres (les deux courbes avec 4 trous de 0 13 ou 8 trous de 0 10 étant pratiquement indiscernables).

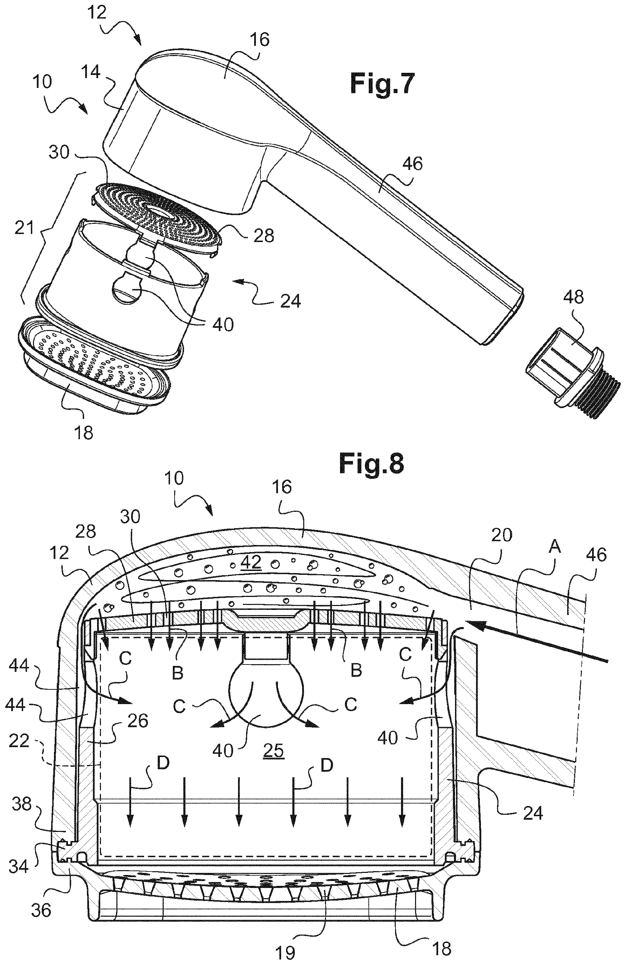

Les Figures 7 et 8 illustrent un autre mode de réalisation de l'invention, où l'élément filtrant est réalisé sous forme d'une douchette à raccorder à un flexible d'arrivée d'eau à filtrer.

Ce mode de réalisation ne sera pas décrit en détail, dans la mesure où, comme on peut le voir sur les figures, les divers éléments décrits plus haut sont structurellement et fonctionnellement semblables, et sont désignés par les mêmes références numériques.

La seule différence réside dans le fait que le corps-enveloppe 12, au lieu d'une arrivée d'eau axiale, est prolongé latéralement par un élément 46 monobloc formant poignée de douchette, dont l'extrémité distale comprend un embout 48 de montage sur un flexible de douche. De ce fait, l'eau à filtrer (flèche A) est admise latéralement dans le volume de détente 42, au lieu de l'être axialement, l'ensemble étant structurellement et fonctionnellement identique pour le reste à ce qui a été décrit plus haut en référence aux Figures 1 à 5.

## Revendications

1. Un élément filtrant (10) pour la filtration de l'eau courante, comprenant :
- un corps enveloppe (12), avec une paroi latérale (14), une paroi supérieure (16) et une paroi inférieure (18), la paroi supérieure comprenant une arrivée d'eau (20) à filtrer et la paroi inférieure étant une paroi pourvue d'un ou plusieurs orifices (19) de sortie d'eau filtrée ; et
- logé à l'intérieur du corps enveloppe, un bloc filtrant (21) comprenant :
· une cartouche filtrante (22) de microfiltration par fibres creuses ; et
· un carter (24) avec un volume intérieur (25) enfermant la cartouche filtrante, le carter comportant une paroi latérale (26) de confinement de la cartouche et étant ouvert vers le haut pour la réception de l'eau à filtrer et ouvert vers le bas pour la délivrance de l'eau filtrée,
**caractérisé en ce que** :
- la partie supérieure du carter et la paroi supérieure (16) du corps enveloppe définissent entre eux un volume de détente (42) de l'eau à filtrer interposé entre l'arrivée d'eau et la partie supérieure du carter ;
- la paroi latérale (26) du carter (24) et la paroi latérale (14) du corps enveloppe (22) définissent entre eux un espace périphérique (44), cet espace périphérique (44) étant en partie supérieure en communication de fluide avec le volume de détente (42) ; et
- la paroi latérale du carter comporte une pluralité de trous (40) de mise en communication du volume intérieur (25) du carter (24) avec l'espace périphérique (44).

2. L'élément filtrant de la revendication 1, dans lequel le nombre et la dimension des trous sont choisis de manière à assurer dans l'espace périphérique (44), à la pression d'admission nominale de l'eau courante à filtrer, une circulation (C) d'une fraction minoritaire du débit total de l'eau à filtrer (A) admise dans le volume de détente (42).

3. L'élément filtrant de la revendication 2, dans lequel ladite fraction minoritaire du débit total de l'eau à filtrer est de 40 % environ.

4. L'élément filtrant de la revendication 1, dans lequel la cartouche filtrante de microfiltration (22) comprend un faisceau de fibres creuses agencées parallèlement, s'étendant depuis une région d'admission située du côté de la partie supérieure du carter jusqu'à une région opposée située du côté de la paroi inférieure (18) du corps enveloppe.

5. L'élément filtrant de la revendication 4, dans lequel les fibres creuses comprennent chacune une paroi périphérique définissant une lumière centrale, et sont agencées de manière à recevoir par l'extérieur de leur paroi l'eau à filtrer admise du côté de la région d'admission, et à délivrer par la lumière interne l'eau filtrée après traversée de la paroi, la lumière interne étant en communication de fluide avec les orifices (19) de sortie d'eau filtrée.

6. L'élément filtrant de la revendication 1, dans lequel la pluralité de trous (40) de la paroi latérale du carter sont situés dans la moitié supérieure de la paroi latérale.

7. L'élément filtrant de la revendication 1, dans lequel la pluralité de trous (40) de la paroi latérale du carter sont circonférentiellement répartis de façon régulière et situés à une même hauteur de la paroi latérale.

8. L'élément filtrant de la revendication 7, dans lequel la paroi latérale du carter comporte 4 à 8 trous (40) circonférentiellement répartis de façon régulière, chacun des trous ayant un diamètre compris entre 10 et 13 mm, pour un carter logeant une cartouche filtrante de diamètre 60 à 70 mm et de hauteur 30 à 45 mm.

9. L'élément filtrant de la revendication 1, dans lequel la largeur en direction radiale de l'espace périphérique (44) est inférieure à 2 mm.

10. L'élément filtrant de la revendication 1, dans lequel le carter comporte en outre en partie supérieure un pare-carter (28) en forme de couvercle muni de perforations (30) permettant le passage de l'eau à filtrer vers la cartouche filtrante.

11. L'élément filtrant de la revendication 10, dans lequel le diamètre des perforations (30) du pare-carter (28) est inférieur à 2 mm.

12. L'élément filtrant de la revendication 11, dans lequel le pare-carter (28) comporte au moins 300 perforations (30) de diamètre inférieur à 2 mm, pour un carter (24) logeant une cartouche filtrante (22) de diamètre 60 à 70 mm.

13. L'élément filtrant de la revendication 1, dans lequel la paroi supérieure (16) du corps enveloppe (12) comprend un embout (20) de montage sur un bec de robinet et de mise en communication étanche avec l'arrivée d'eau à filtrer.

14. L'élément filtrant de la revendication 1, dans lequel la paroi supérieure (16) du corps enveloppe (12) comporte un prolongement latéral (46) formant poignée de douchette, dont l'extrémité distale comprend un embout (48) de montage sur un flexible de douche et de mise en communication étanche avec l'arrivée d'eau à filtrer.
